# EUROPÄISCHE PATENTSCHRIFT

(11) **EP 2 151 467 B1**
(45) Veröffentlichungstag und Bekanntmachung des Hinweises auf die Patenterteilung: **09.03.2011**
(21) Anmeldenummer: 09164979.8
(22) Anmeldetag: 09.07.2009
(51) Int. Cl.: C08G 77/08, C08G 77/26, C08L 83/08

(54) **Durch Click-Reaktion vernetzbare mehrkomponentige Siliconzusammensetzungen**
Click-reaction crosslinkable multicomponent silicone compositions
Composition silicone comprenant plusieurs composants et réticulable par "Click-Réaction"

(30) Priorität: 31.07.2008 DE 102008040886
(43) Veröffentlichungstag der Anmeldung: 10.02.2010
(73) Patentinhaber: Wacker Chemie AG, 81737 München (DE)
(72) Erfinder: Ritter, Dr. Stefan, 84561, Mehring (DE); Sieglhuber, Friedrich, 5282, Ranshofen (AT)
(74) Vertreter: Fritz, Helmut

(56) Entgegenhaltungen:
- WO-A1-2007/075285
- WO-A1-2007/132000
- W.H. BINDER: "click chemistry in polymer and material science" MACROMOLECULAR RAPID COMMUNICATIONS, Bd. 28, Nr. 1, 22. Januar 2007 (2007-01-22), Seiten 15-54, XP002541431 DOI: 10.1002/marc.200600625

## Beschreibung

Die Erfindung betrifft durch die Click-Reaktion vernetzbare mehrkomponentige Siliconzusammensetzungen, welche nach Mischen der einzelnen Komponenten zu einem gummielastischen Material aushärten.

Im Bereich der mehrkomponentigen, bei Raumtemperatur vernetzenden Siliconzusammensetzungen (RTV-2 Siliconkautschuke) haben insbesondere die Platin-katalysierte Hydrosilylierung, als auch die Zinn-katalysierte Kondensation eine breite Anwendung als Vernetzungsreaktionen gefunden. Beide Reaktionstypen ermöglichen die Ausbildung eines stabilen dreidimensionalen Netzwerkes durch die Verknüpfung von Polyorganosiloxanen mit geeigneten Vernetzern. Sogenannte "Additions-vernetzende RTV-2 Systeme" basieren auf der (meist Platin-katalysierten) Umsetzung alkenylfunktioneller Polyorganosiloxane mit SiH-funktionellen Oligosiloxanen. Sogenannte "Kondensations-vernetzende RTV-2 Systeme" basieren auf der in Gegenwart von Wasser auftretenden, meist Zinnkatalysierten, Verknüpfung von Si-OH funktionellen Polysiloxanen durch polyfunktionelle Silane mit hydrolisierbaren Gruppen, wie beispielsweise Tetraethoxysilan, bzw. Tetrapropoxysilan oder Kondensaten daraus. Beide Vernetzungsmechanismen erlauben die einfache Herstellung von Vulkanisaten mit definierten Netzwerkstrukturen aufgrund der unter Normalbedingungen nahezu quantitativ ablaufenden Reaktionen. Die erhaltenen gummielastischen Werkstoffe zeichnen sich dabei durch spezielle Eigenschaften aus. Als solche wären beispielsweise zu nennen: hohe thermooxidative Beständigkeit, gute Kälteflexibiltät und chemische Inertheit.

Trotz all dieser Vorteile besitzen diese Systeme auch Nachteile:

Im Gegensatz zu den Additions-vernetzenden Systemen verläuft die Netzwerkbildung der Kondensations-vernetzenden Systeme unter Abspaltung niedermolekularer Einheiten, meist kurzkettiger Alkohole, wie Methanol oder Ethanol. Durch die Diffusion dieser Stoffe aus dem Vulkanisat ergibt sich nicht nur eine gesundheitliche, wie sicherheitsrelevante Problematik, sondern auch eine Volumenverringerung ("Schrumpf") des Formkörpers. Ferner stellen die verwendeten Zinn-Katalysatoren, meist Diorgano-Zinn(IV)-dicarboxylate, ein schwer einschätzbares Risiko für Gesundheit und Umwelt dar. Additions-vernetzende Systeme dagegen benötigen PlatinKatalysatoren, welche oftmals als sensibilisierend eingestuft sind und zudem hohe Rohstoffkosten nach sich ziehen. Zudem lassen sich diese Katalysatoren leicht durch in der Umwelt allgegenwärtige chemische Verbindungen, sog. Katalysatorgifte (Amine, Thiole), inhibieren. Dies schränkt den praktischen Einsatz dieser Systeme teils erheblich ein. Ein in Additionssystemen bedingter anteilsmäßiger Überschuss des SiH-funktionellen Vernetzers verursacht zudem eine Nachvernetzung des Vulkanisats. Die Instabilität der SiH-Funktion gegenüber Luftsauerstoff, in Gegenwart des Pt-Katalysators, führt zu einer Umwandlung zu einer Si-OH Gruppe, welche anschließend mit weiteren Si-OH Gruppen unter Wasserabspaltung reagiert. Der sich daraus ergebende sog. "compression set" ist ein für Additionssysteme typischer Nachteil und kann nur durch energieaufwendiges Tempern, oder den Zusatz spezieller Additive verringert werden.

Nicht nur aufgrund dieser Nachteile ist der Einsatz alternativer Vernetzungsmechanismen von großem Interesse und Bestandteil aktueller Forschung. Bisher entwickelte Verfahren erbringen allerdings keine nennswerte Vorteile, bzw. teilweise sogar zusätzliche Nachteile. So resultiert aus der Vulkanisation Vinylgruppen-reicher Polysiloxane mit Schwefel, bzw. Thiolen eine Verschlechterung der mechanischen Eigenschaften. Die Dehydrokondensation zwischen Si-H und Si-OH Gruppen als Vernetzungsreaktion kann nur zur Herstellung dünner Schichten (Coatings) verwendet werden, da in großen Mengen Wasserstoff entsteht, welcher das Material aufschäumen lässt. Die strahlungsinduzierte Vernetzung erfordert hohe Strahlendosen. Die Effizienz der Vernetzung wird unter Normalbedingungen durch Luftsauerstoff verringert und es treten unerwünschte Nebenreaktionen auf.

Der Bedarf an einem Vernetzungssystmen für mehrkomponentige Siliconkautschuke, die bei Raumtemperatur zu gummielastischen Materialien aushärten und o.g. Nachteile überwinden, ist seit langer Zeit gegeben. Es zeigte sich überraschend, dass die (nachfolgend näher erläuterte) Cu(I)-katalysierte 1,3-dipolare [2+3] Cycloaddition zwischen terminalen Alkinen und Aziden (nachfolgend nur noch als "Click-Reaktion" bezeichnet) hierfür äußerst geeignet ist.

Die heute allgemein als "Click-Reaktion" bekannte Cu(I)-katalysierte 1,3-dipolare [2+3] Cycloaddition zwischen terminalen Alkinen und Aziden geht ursprünglich auf die von Huisgen and Szeimies untersuchte unkatalysierte, thermische Reaktionsvariante zurück [Huisgen, R.; Szeimies, G.; Moebius, L.; Chem. Ber. 1967, 100, 2494]. Sie ermöglicht die Synthese von 1,4- und 1,5-disubstituierten aromatischen 1,2,3-Triazolen unter einfachen Bedingungen. Sharpless entdeckte 2002 den katalysierten Reaktionstyp und erkannte sein Potential, beliebige chemische "Bausteine" in höchst effizienter Weise miteinander zu verknüpfen [Lewis, W. G.; Green, L. G.; Grynszpan, F.; Radic, Z.; Carlier, P. R.; Taylor, P.; Finn, M. G.; Sharpless, B. K.; Angew. Chem., Int. Ed. 2002, 41, 2596]. Er benutzte die Reaktion im Rahmen des von ihm zuvor als "Click-Chemie" benannten Prinzips zur Synthese von biologisch aktiven Wirkstoffen und von Polymeren. Die katalytische Wirkung von Cu⁺-Ionen beruht dabei auf der Bildung eines KupferAcetylids, welches wesentlich reaktiver gegenüber einem Azid ist als das ursprüngliche terminale Alkin. Dies resultiert in einer Absenkung der Aktivierungsenergie, bzw. eine Erhöhung der Reaktionsgeschwindigkeit um den Faktor 10⁷ bei Raumtemperatur [Wang, Q.; Chan, T. R.; Hilgraf, R.; Fokin, V. V.; Sharpless, K. B.; Finn, M. G.; J. Am. Chem. Soc. 2003, 125, 3192]. Dabei wirkt der Katalysator höchst spezifisch und unter Erhalt der Inertheit der beiden funktionellen Gruppen (Azid, Alkin) unter gewöhnlichen, in unserer Umwelt auftretenden, physikalischen Bedingungen und gegenüber nahezu allen unter diesen Umständen auftretenden chemisch reaktiven Verbindungen. Ferner ist die Reaktion nahezu irreversibel, v.a. im Vergleich zu Diels-Alder-Cycloadditionen. Außerdem zeichnet sich die gebildete Triazol-Gruppe durch eine große Beständigkeit gegenüber thermischer Zersetzung und den meisten reaktiven chemischen Verbindungen wie Oxidationsmitteln, Reduktionsmitteln, sowie Säuren und Laugen aus.

Darin begründet sich die Attraktivität dieses Reaktionstypes. Click-Reaktionen liefern für gewöhnlich annähernd quantitative Umsätze, ohne auftretende Nebenreaktionen und werden von äußeren Reaktionsbedingungen kaum beeinflusst. Daher ist die Click-Reaktion von großer Bedeutung für präparative Methoden, die auf diesen Merkmalen basieren - wie beispielsweise Polymerisationsreaktionen.

Die Anwendung der Click-Reaktion im Bereich der Polymerchemie und Materialwissenschaft wurde kürzlich von Lutz, Binder und Sachsenhofer zusammengefasst [Lutz, J.-F.; Angew. Chem. Int. Ed. Engl. 2007, 46, 1018. Binder, W. H.; Sachsenhofer, R.; Macromol. Chem. Rapid. Commun. 2007, 28, 15]. So wurde die Click-Reaktion besispielsweise zur Herstellung von Polytriazolen [Diaz, D. D.; Punna, S.; Holzer, P.; McPherson, A. K.; Sharpless, K. B.; Fokin, V. V.; Finn, M. G.; J. Polym. Sci., Part A: Polym. Chem. 2004, 42, 4392], Block-Copolymeren [Opsteen, J. A.; van Hest, J. C. M.; Chem. Commun. 2005, 57], gepfropften Block-Copolymeren [Parrish, B.; Breitenkamp, R. B.; Emrick, T.; J. Am. Chem. Soc. 2005, 127, 7404], Hydrogelen [Ossipov, D. A.; Hilborn, J.; Macromolecules 2006, 39, 1709] und von Dendrimeren [Wu, P.; Feldman, A. K.; Nugent, A. K.; Hawker, C. J.; Scheel, A.; Voit, B.; Pyun, J.; J. Frechet, M. J.; Sharpless, K. B.; Fokin, V. V.; Angew. Chem., Int. Ed. 2004, 43, 3928. Malkock, M.; Schleicher, K.; Drockenmuller, E.; Hawker, C. J.; Russell, T. P.; Wu, P.; Fokin, V. V.; Macromolecules 2005, 38, 3663] benutzt.

Neben diesen Anwendungsbeispielen fand die Click-Reaktion auch Verwendung in Kombination mit polymerem SiO₂ [Rozkiewicz, D. I.; Janczewski, D.; Verboom, W.; Ravoo, B. J.; Reinhoudt, D. N.; Angew. Chem. Int. Ed. 2006, 45, 5292. Rhode, R. D.; Agnew, H. D.; Yeo, W.-S.; Bailey, R. C.; Heath, J. R.; J. Am. Chem. Soc. 2006, 128, 9518. Ranjan, R.; Brittain, W. J.; Polymer Preprints (Am. Chem. Soc., Div. of Polym. Chem.) 2008, 48, 797] und Siliconen. So wird in WO2007/132005 A2 die Verwendung von Silicon-Hybridmaterialien als Emulgatoren für Kosmetika beansprucht.

Die Verwendung von Azido-funktionellen Silanen, bzw. Oragnosiliciumverbindungen zur Modifikation polymerer Werkstoffe - allerdings nicht im Rahmen des "Click-Chemie"-Prinzips - ist ebenfalls bekannt. WO0110914 beschreibt die Pfropfung von Azidosilanen auf Polyethylen durch thermische Zersetzung der Azidgruppen. Die DE10011644 A1 beschreibt die Verwendung von Azidosilanen als Vernetzungsmittel in Beschichtungsstoffen. Die Reaktion der Azidgruppen wird hier entweder durch thermische Zersetzung, oder durch Aktivierung mittels elektromagnetischer Strahlung verursacht.

Trotz dieser vielfältigen Anwendungen fand die Click-Reaktion bislang keinen Einsatz als Vernetzungsmechanismus zur Herstellung gummielastischer Silicon-Kunststoffe.

Im Folgenden werden von dem Begriff siliciumorganische Verbindung sowohl polymere, oligomere wie auch dimere und monomere Siloxane mit Si-C-Bindungen und von dem Begriff Organopolysiloxane sowohl polymere, oligomere wie auch dimere Siloxane umfasst.

Gegenstand der Erfindung sind durch die Click-Reaktion vernetzbare mehrkomponentige Siliconzusammensetzungen (S), welche nach Mischen der einzelnen Komponenten zu einem gummielastischen Material aushärten, die
- mindestens eine Verbindung (A) oder (B),
- mindestens eine Verbindung (B) oder (C), und
- mindestens einen Cu-Katalysator (D)
enthalten, wobei
(A) eine organische Verbindung oder eine siliciumorganische Verbindung darstellt, welche mindestens zwei Reste mit terminalen aliphatischen Kohlenstoff-Kohlenstoff-Dreifachbindungen mit endständig gebundenem Wasserstoff besitzt;
(B) eine organische Verbindung oder eine siliciumorganische Verbindung darstellt, welche mindestens zwei Reste mit terminalen aliphatischen Kohlenstoff-Kohlenstoff-Dreifachbindungen mit endständig gebundenem Wasserstoff und gleichzeitig mindestens zwei Reste mit Kohlenstoff-gebundenen Azidgruppen besitzt;
(C) eine organische Verbindung oder eine siliciumorganische Verbindung darstellt, welche mindestens zwei Reste mit Kohlenstoff-gebundenen Azidgruppen besitzt;
mit der Maßgabe, dass eine Komponente nicht gleichzeitig Verbindungen der Gruppe (B) und (D), oder gleichzeitig (A), (C) und (D) enthält, und
dass mindestens eine der eingesetzten Verbindung, ausgewählt aus (A), (B) und (C) eine siliciumorganische Verbindung darstellt.

Die vernetzbaren Siliconzusammensetzungen (S) haben den Vorteil, dass sie in einem einfachen Verfahren, unter Verwendung leicht zugänglicher Ausgangsstoffe, und damit wirtschaftlich hergestellt werden können. Die Siliconzusammensetzungen (S) haben den weiteren Vorteil, dass sie als zwei- oder mehrkomponentige Formulierung bei 0 - 50°C und Umgebungsdruck eine gute Lagerstabilität aufweisen und erst nach Mischen der beiden Komponenten rasch vernetzen.

Die Siliconzusammensetzungen (S) haben ferner den Vorteil, dass sich die zur Vernetzung verwendete Cycloadditionsreaktion mit der Reaktionsdauer beschleunigt, da durch die gebildeten Triazolgruppen ein autokatalytischer Effekt verursacht wird. Dies hat eine günstige Vulkanisationscharakteristik zur Folge.

Die in den durch die Click-Reaktion vernetzbaren mehrkomponentigen Siliconzusammensetzungen (S)eingesetzten Verbindungen (A), (B) und (C) werden so gewählt, dass eine Vernetzung möglich ist. So weist beispielsweise Verbindung (A) mindestens zwei terminale Alkingruppen mit endständig gebundenem Wasserstoff auf und (C) mindestens drei Kohlenstoffgebundene Azidgruppen, oder Verbindung (A) weist mindestens drei terminale Alkingruppen mit endständig gebundenem Wasserstoff auf und Verbindung (C) mindestens zwei Kohlenstoffgebundene Azidgruppen, oder aber anstelle von Verbindung (A) und (C) wird Verbindung (B) eingesetzt, welche terminale Alkingruppen und gleichzeitig Kohlenstoff-gebundene Azidgruppen in den zuvor genannten Verhältnissen aufweist. Auch sind Mischungen aus (A) und (B) und (C) mit den zuvor genannten Verhältnissen von terminalen Alkingruppen und Kohlenstoffgebundenen Azidgruppen möglich.

Bei der Verbindung (A) kann es sich um siliciumfreie organische Verbindungen mit mindestens zwei terminalen aliphatischen Kohlenstoff-Kohlenstoff-Dreifachbindungen, sogenannten terminalen Alkingruppen mit endständig gebundenem Wasserstoff, sowie um siliciumorganische Verbindungen mit eben dieser funktionellen Gruppe handeln oder auch um deren Mischungen. Verbindung (A) enthält keine Kohlenstoff-gebundenen Azidgruppen.

Beispiele für siliciumfreie organische Verbindungen (A) sind aliphatische Diine, verzweigt oder unverzweigt wie 1,3-Butadiin, 1,4-Pentadiin, 1,5-Hexadiin, 1,6-Heptadiin, 1,7-Octadiin, sowie höhere Homologe. Weitere Beispiele sind Diprop-2-inylether, Dipropargylamin, Tripropargylamin, 2,5-Diethynyl-2,5-dimethyl-tetrahydro-furan, Propiolsaeure-(2-propinyl)ester, Tetra-(2-propinyloxy-methyl)methan, 3-Prop-2-inyloxy-2,2-bis-prop-2-inyloxymethyl-propan-1-ol, 5,5-Di-prop-2-inyl-pyrimidine-2,4,6-trion, Di-prop-2-inyl-malonsäurediethylester, 1.2-Epoxy-2-prop-2-inyl-pentin-(4), 2-prop-2-inyl-pent-4-in-säure, Hepta-1,6-diin-4-ol, 4-Prop-2-inyl-hepta-1,6-diin-4-ol, 4-Propyl-hepta-1,6-diin-4-ol 3,3-di-prop-2-inyl-pentan-2,4-dion. Beispiele für aromatische Verbindungen sind 1,3,5-Tris-prop-2-inyloxybenzol, 1,2,3-tris-prop-2-inyloxybenzol, 2,4,6-tris(propargylamino)-1,3,5-triazin, 1,8-Diethinyl-naphthalin, 4-Phenyl-hepta-1,6-diin-4-ol, 2-(1-Prop-2-inyl-but-3-inyl)-chinolin.

Als Organosiliciumverbindungen (A), die SiC-gebundene aliphatische Reste mit terminalen Kohlenstoff-Kohlenstoff-Dreifachbindungen aufweisen, werden vorzugsweise lineare oder verzweigte Organopolysiloxane aus Einheiten der allgemeinen Formel (I)

RₐR¹_{b}SiO_{(4-a-b)/2} (I)

eingesetzt, wobei
- **R**: ein von aliphatischen Kohlenstoff-Kohlenstoff- Dreifachbindungen freien, organischen oder anorganischen Rest,
- **R¹**: einen einwertigen, substituierten oder nicht substituierten, SiC-gebundenen Kohlenwasserstoffrest mit mindestens einer aliphatischen terminalen Kohlenstoff- Kohlenstoff-Dreifachbindung,
- **a**: 0, 1, 2 oder 3 und
- **b**: 0, 1, 2 oder 3
bedeuten,
mit der Maßgabe, dass die Summe **a + b** kleiner oder gleich 3 ist und mindestens 2 Reste **R¹** je Molekül vorliegen.

Bei dem Rest **R** kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der allgemeinen Formel (I) miteinander verbinden.

Beispiele für Reste **R** sind Alkylreste, wie der Methyl-, Ethyl-, n-Propyl-, iso-Propyl-, n-Butyl-, iso-Bulyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Alkenylreste, wie der Vinyl- und Allylrest, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, sowie der α- und der β-Phenylethylrest.

Weitere Beispiele für **R** sind die einwertigen Reste -F, -Cl, - Br, OR², -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß der allgemeinen Formel (I) Si-gebundene Reste. Falls es sich bei Rest **R** um SiC-gebundene, substituierte Kohlenwasserstoffreste handelt, sind bevorzugte Substituenten Halogenatome, phosphorhaltige Reste, Cyanoreste, -OR², -NR²-, -NR²₂, -NR²-C(O)-NR²₂, -C(O)-NR²₂, - C(O)R², -C(O)OR², -SO₂-Ph und -C₆F₅. Dabei bedeuten **R²** ein Wasserstoffatom oder einen einwertigen Kohlenwasserstoffrest mit 1 bis 20 Kohlenstoffatomen und **Ph** gleich Phenylrest.

Beispiele für substituierte Reste **R** sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)-N(R²)C(O)NR²₂, -(CH₂)ₙ-C(O)NR²₂, -(CH₂)ₙ-C(O)R², -(CH₂)ₙ-C(O)OR², -(CH₂)ₙ-C(O)NR²₂, -(CH₂)ₙ-C(O)-(CH₂)ₘC(O)CH₃, -(CH₂)ₙ-O-CO-R², -(CH₂)ₙ-NR²-(CH₂)ₘ-NR²₂, -(CH₂)ₙ-O-(CH₂)ₘCH(OH)CH₂OH, -(CH₂)ₙ(OCH₂CH₂)ₘOR², -(CH₂)ₙ-SO₂-Ph und -(CH₂)ₙ-O-C₆F₅, wobei **R²** und **Ph** der oben dafür angegebene Bedeutung entspricht und **n** und m gleiche oder verschiedene ganze Zahlen zwischen 0 und 10 bedeuten.

Beispiele für **R** gleich zweiwertige, beidseitig an der allgemeinen Formel (I) Si-gebundene Reste sind solche, die sich von den voranstehend für Rest **R** genannten einwertigen Beispiele dadurch ableiten, dass eine zusätzliche Bindung durch Substitution eines Wasserstoffatoms erfolgt, Beispiele für derartige Reste sind -(CH₂)-, -CH(CH₃)-, -C(CH₃)₂-, -CH(CH₃)-CH₂-, -C₆H₄-, -CH(Ph)-CH₂-, -C(CF₃)₂-, -(CH₂)ₙ-C₆H₄-(CH₂)ₙ-, - (CH₂)ₙ-C₆H₄-C₆H₄-(CH₂)ₙ-, -(CH₂O)ₘ, (CH₂CH₂O)ₘ, -(CH₂)ₙ-Oₖ-C₆H₄-SO₂-C₆H₄-Oₖ-(CH₂)ₙ-, wobei **k** 0 oder 1 ist, und **Ph, m** und **n** die voranstehend genannte Bedeutung haben.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei dem Rest **R¹** kann es sich um beliebige, mindestens eine terminale Alkinfunktion enthaltende Gruppe handeln. Falls es sich bei Rest **R¹** um SiC-gebundene, zusätzlich substituierte Kohlenwasserstoffreste handelt, sind als zusätzliche Substituenten Halogenatome, Cyanoreste und -OR² bevorzugt, wobei **R²** die obengenannte Bedeutung hat.

Bevorzugt handelt es sich bei Rest **R¹** um einen aliphatischen Kohlenwasserstoffrest, verzweigt oder unverzweigt, gesättigt, oder ungesättigt, mit 2 bis 16 Kohlenstoffatomen, der mindestens eine terminale Alkingruppe trägt. Beispiele für den Rest **R¹** sind Ethinyl-, Propargyl-, 3-Butinyl, But-1-en-3-inyl, 1-Ethinyl-but-3-inyl-, 4-Pentinyl, Pent-1-en-4-inyl, 5-Hexinyl, Hex-1-en-5-inyl, wobei Ethinyl- und Propargylreste besonders bevorzugt verwendet werden.

Außerdem handelt es sich bei dem Rest **R¹** bevorzugt um einen amino- oder amidofunktionellen, bzw. ether- oder esterfunktionellen Kohlenwasserstoffrest der allgemeinen Formeln (II), (III), (IV), oder (V)

-(CH₂)ₓN(CO)_{y}R³_{z} (II)

-(CH₂)ₓ(CO)_{y}NR³_{z} (III)

-(CH₂)ₓO(CO)_{y}R³ (IV)

-(CH₂)ₓ(CO)_{y}OR³ (V)

wobei
- **x**: eine ganze Zahl zwischen 1 und 16 ist,
- **y**: 0 oder 1 ist,
- **z**: 1 oder 2 ist,
(y+z) gleich 2 ist,
(CO) eine Carbonylfunktion darstellt,
**R³** ein Wasserstoffatom oder einen Propargyl-, 3-Butinyl-, 4-Pentinyl-, oder 5-Hexinyl-Rest darstellt,
mit der Maßgabe, dass der Rest **R¹** mindestens eine terminale Alkingruppe enthält.

Als Organosiliciumverbindungen (A), die Si-O-C-gebundene Reste mit terminalen Kohlenstoff-Kohlenstoff-Dreifachbindungen aufweisen, werden vorzugsweise lineare oder verzweigte Organopolysiloxane aus Einheiten der allgemeinen Formel (VI)

Rₐ(R¹O)_{b}SiO_{(4-a-b)/2} (VI)

eingesetzt, wobei
R, **R¹, a** und **b**
die oben genannten Bedeutungen haben,
mit der Maßgabe, dass die Summe **a** + **b** kleiner oder gleich 3 ist und mindestens 2 Reste **R¹** je Molekül vorliegen.

Als monomere Organosiliciumverbindungen (A), die SiC-gebundene Reste mit aliphatischen terminalen Kohlenstoff-Kohlenstoff-Dreifachbindungen aufweisen, werden vorzugsweise Verbindungen der allgemeinen Formel (VII)

RₚR¹_{q}Si(OR)ₛ(OR¹)ₜ (VII)

verwendet, wobei
- **p**: 0, 1 oder 2 ist,
- **q**: 0, 1, 2, 3 oder 4 ist,
- **s**: 0, 1 oder 2 ist,
- **t**: 0, 1, 2, 3 oder 4 ist,
die Summe **(p+q+s+t)** immer gleich 4 ist und
die Reste **R** und **R¹** den oben genannten Bedingungen entsprechen, mit der Maßgabe, dass mindestens 2 Reste **R¹** je Molekül vorliegen.

Das Molekulargewicht der Verbindung (A) kann in weiten Grenzen variieren, beispielsweise von 10² bis 10⁶ g/mol, jeweils als Zahlenmittel, bestimmt mittels NMR. So kann es sich bei dem Bestandteil (A) beispielsweise um ein relativ niedermolekulares organisches polyfunktionelles Alkin oder ein niedermolekulares alkinylfunktionelles Oligosiloxan, wie 1,2-Diethinyltetramethyldisiloxan, handeln, jedoch auch um ein über kettenständige oder endständige Si-gebundene Ethinylgruppen verfügendes hochpolymeres Polydimethylsiloxan, z.B. mit einem Molekulargewicht von 10⁵ g/mol. Gegebenenfalls kann bei den eingesetzten Polydimethylsiloxanan auch ein Teil der Methylgruppen durch 3,3,3-Trifluorpropyl- oder Phenylgruppen ersetzt sein.

Auch die Struktur der Verbindung (A) ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der allgemeinen Formeln R₃SiO_{1/2}, R¹R₂SiO_{1/2}, R¹RSiO_{2/2} und R₂SiO_{2/2} zusammengesetzt, wobei **R** und **R¹** die vorstehend angegebene Bedeutung haben. Verzweigte und netzwerkartige Polysiloxane enthalten zusätzlich trifunktionelle und/oder tetrafunktionelle Einheiten, wobei solche der allgemeinen Formeln RSiO_{3/2}, R¹SiO_{3/2} und SiO_{4/2} bevorzugt sind. Selbstverständlich können auch Mischungen unterschiedlicher, den Kriterien der Verbindung (A) genügender Siloxane eingesetzt werden.

Besonders bevorzugt als Verbindung (A) ist die Verwendung ethinylfunktioneller, im wesentlichen linearer Polydiorganosiloxane mit einer Viskosität von mindestens 0,01 besonders bevorzugt mindestens 0,1 Pa•s, bis 500 000 Pa•s, besonders bevorzugt höchstens 100 000 Pa•s, insbesondere höchstens 50 000 Pa•s, jeweils bei 25°C. Vorzugsweise sind mindestens 80 % der Siloxaneinheiten der Verbindung (A) solche der allgemeinen Formel R₂SiO_{2/2}.

Bei der Verbindung (C) kann es sich um siliciumfreie organische oder siliciumorganische Verbindungen mit mindestens zwei kohlenstoffgebundenen Azidgruppen handeln, oder auch um deren Mischungen. Verbindung (C) enthält keine terminalen Alkingruppen.

Beispiele für siliciumfreie organische Verbindungen (C) sind Kohlenwasserstoffe, wie aliphatische, cyclische, verzweigt oder unverzweigte, gesättigte oder ungesättigte oder aromatische Kohlenwasserstoffe, die jeweils Heteroatome ausgewählt aus N, O, S, P, aufweisen können, mit 6 bis 50 Kohlenstoffatomen, die mindestens zwei kohlenstoffgebundene Azidgruppen tragen. Beispiele für organische Verbindungen (C) die zwei Azidgruppen tragen, sind 1,3-diazidopropan, 1,4-diazidobutan, 1,5-diazidopentan, 1,6-diazidohexan, cis/trans-1,2-Diazidocyclopentan, trans-1,3-Diazidocyclopentan, 3,6-Diazidocyclohexen, 1,2-Bis-(azidomethyl)-benzol. Weitere Beispiele sind Tris-(2-azido-ethyl)-amine, N,N'-Bis-(2-azidoethyl)-N''-(2-bromo-ethyl)-amin, 2-[Bis-(2-azido-ethyl)-amino]-ethanol, Erythro-1,2,3,4-tetraazidobutan, Pentaerythrityltetraazid, 3-Azido-2,2-bis-azidomethyl-propan-1-ol, 1,3-Diazido-2-azidomethyl-2-methyl-propan, 1-Azido-2,2-bis-azidomethyl-3-propoxy-propan, 1-Azido-2,2-bis-azidomethyl-decan, 1-Azido-2,2-bis-azidomethyl-dodecan, 1-Azido-2,2-bis-azidomethyl-tetradecan, α,α,α-Tris-(azidomethyl)-toluol, 1-Azido-3-(3-azido-2,2-bis-azidomethyl-propoxy)-2,2-bis-azidomethyl-propan, 2-Nitro-2-azidomethyl-1,3-diazidopropan, 2-Amino-2-azidomethyl-1,3-diazidopropan, 2,2-Bis(azidomethyl)-1,3-propandiol, 2,4,6-Tris(3-azido-propylamino)-1,3,5-triazin, 2,4,6-Tris(2-azido-ethylamino)-1,3,5-triazin.

Als Organopolysiloxane (C), die Kohlenstoff-gebundene Azidgruppen aufweisen, werden vorzugsweise lineare, cyclische oder verzweigte Organopolysiloxane aus Einheiten der allgemeinen Formel (VIII)

R'_{c}R⁴_{b}SiO_{(4-c-d)/2} (VIII)

eingesetzt, wobei
- **R'**: die Bedeutungen von **R** aufweist,
- **R⁴**: einen einwertigen, substituierten oder nicht substituierten, SiC-gebundenen Kohlenwasserstoffrest mit mindestens einer Kohlenstoff-gebundenen Azidgruppe,
- **c**: 0, 1, 2 oder 3 und
- **d**: 0, 1, 2 oder 3
bedeuten,
mit der Maßgabe, dass die Summe **c + d** kleiner oder gleich 3 ist und mindestens 2 Reste **R⁴** je Molekül vorliegen.

Bei dem Rest **R⁴** kann es sich um beliebige, mindestens eine Azidfunktion enthaltende Gruppe handeln.

Falls es sich bei Rest **R⁴** um SiC-gebundene, zusätzlich substituierte Kohlenwasserstoffreste handelt, sind als zusätzliche Substituenten Halogenatome, Cyanoreste und -OR**²** bevorzugt, wobei **R²** die oben genannte Bedeutung hat.

Bevorzugt handelt es sich bei Rest **R⁴** um einen aliphatischen Kohlenwasserstoffrest, verzweigt oder unverzweigt, gesättigt, oder ungesättigt, mit 2 bis 16 Kohlenstoffatomen, der mindestens eine Kohlenstoff-gebundene Azidgruppe trägt. Beispiele für den Rest **R⁴** sind Azidomethyl, 2-Azidoethyl, 3-Azidopropyl, 4-Azidobutyl, wobei 2-Azidoethyl- und 3-Azidopropylreste besonders bevorzugt verwendet werden.

Außerdem handelt es sich bei dem Rest **R⁴** bevorzugt um einen Amino- oder Amidofunktionellen, bzw. Ether- oder Esterfunktionellen Kohlenwasserstoffrest der allgemeinen Formeln (IX), (X), (XI) oder (XII)

-(CH₂)ₓN(CO)_{y}R⁵_{z} (IX)

-(CH₂)ₓ(CO)_{y}NR⁵_{z} (X)

-(CH₂)ₓO(CO)_{y}R⁵ (XI)

-(CH₂)ₓO(CO)_{y}R⁵ (XII)

wobei
**x, y und z** die zuvor genannte Bedeutung haben,
(y+z) gleich 2 ist,
(CO) eine Carbonylfunktion darstellt,
**R⁵** ein Wasserstoffatom, oder einen Azidomethyl-, 2-Azidoethyl-, 3-Azidopropyl- oder 4-Azidobutylrest darstellt,
mit der Maßgabe, dass der Rest **R⁴** mindestens eine Kohlenstoffgebundene Azidgruppe enthält.

Beispiele für monomere siliciumorganische Verbindungen (C) sind Verbindungen der allgemeinen Formel (XIII)

R'ₚR⁴_{q}Si(OR')ₛ(OR⁴)ₜ (XIII)

wobei
**p, q, s und t** die zuvorgenannte Bedeutung haben,
die Summe (p+q+s+t) immer gleich 4 ist und
die Reste R' und **R**⁴ den oben genannten Bedingungen entsprechen, mit der Maßgabe, dass mindestens 2 Reste **R⁴** je Molekül vorliegen.

Das Molekulargewicht der Verbindung (C) kann ebenfalls in weiten Grenzen variieren, etwa von 10² bis 10⁶ g/mol, jeweils als Zahlenmittel, bestimmt mittels NMR. So kann es sich bei der Verbindung (C) beispielsweise um ein relativ niedermolekulares organisches polyfunktionelles Azidoalkan oder ein niedermolekulares azidofunktionelles Oligosiloxan, wie 1,2-Di-(3-Azidopropyl)-tetramethyl-disiloxan, handeln, jedoch auch um ein, über kettenständige oder endständige Si-gebundene Azidoalkylgruppen verfügendes, hochpolymeres Polydimethylsiloxan, z.B. mit einem Molekulargewicht von 10⁵ g/mol. Gegebenenfalls kann bei den eingesetzten Polydimethylsiloxanan auch ein Teil der Methylgruppen durch 3,3,3-Trifluorpropyl- oder Phenylgruppen ersetzt sein.

Auch die Struktur der Verbindung (C) ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der allgemeinen Formeln R'₃SiO_{1/2}, R⁴R'₂SiO_{1/2}, R⁴R'SiO_{2/2} und R'₂SiO_{2/2} zusammengesetzt, wobei **R'** und **R⁴** die vorstehend angegebene Bedeutung haben.

Verzweigte und netzwerkartige Polysiloxane enthalten zusätzlich trifunktionelle und/oder tetrafunktionelle Einheiten, wobei solche der allgemeinen Formeln R'SiO_{3/2}, R₄SiO_{3/2} und SiO_{4/2} bevorzugt sind. Selbstverständlich können auch Mischungen unterschiedlicher, den Kriterien der Verbindung (C) genügende Siloxane eingesetzt werden.

Besonders bevorzugt als Verbindung (C) ist die Verwendung azidofunktioneller, im wesentlichen linearer Polydiorganosiloxane mit einer Viskosität von mindestens 0,01 besonders bevorzugt mindestens 0,1 Pa•s, bis 500 000 Pa•s, besonders bevorzugt höchstens 100 000 Pa•s, insbesondere höchstens 50 000 Pa•s, jeweils bei 25°C. Vorzugsweise sind mindestens 95 % der Siloxaneinheiten der Verbindung (A) solche der allgemeinen Formel R'₂SiO_{2/2}.

Selbstverständlich können auch Mischungen unterschiedlicher Verbindungen (C) eingesetzt werden. Insbesondere können die Verbindungen (C) zusätzlich zu den obligaten Azidosubstituierten Alkylgruppen gegebenenfalls zugleich auch aliphatisch ungesättigte Gruppen enthalten.

Verbindung (C) ist vorzugsweise in einer solchen Menge in den vernetzbaren Siliconzusammensetzungen (S) enthalten, dass das Molverhältnis von Azidgruppen zu terminalen Alkingruppen aus Verbindungen (A) bei 0,1 bis 10, besonders bevorzugt zwischen 0,2 und 5, liegt.

Die Verbindungen (A) und (C) sind vorzugsweise handelsübliche Produkte bzw. nach in der Chemie gängigen Verfahren herstellbar.

Anstelle von Verbindungen (A) und/oder (C) können die Siliconzusammensetzungen (S) auch Organopolysiloxane des Typs (B) enthalten, welche gleichzeitig aliphatische terminale Kohlenstoff-Kohlenstoff-Dreifachbindungen und Kohlenstoffgebundene Azidgruppen aufweisen. Auch können die Siliconzusammensetzungen (S) alle drei Verbindungen (A), (B) und (C) enthalten.

Falls Organopolysiloxane (B) eingesetzt werden, handelt es sich vorzugsweise um solche aus Einheiten der allgemeinen Formeln (XIV),

R"ₑR¹_{f}R⁴_{g}SiO_{(4-e-f-g)/2} (XIV),

wobei
- **R"**: die Bedeutungen von **R** aufweist,
- **R¹** und **R⁴**: die oben dafür angegebene Bedeutung haben
- **e**: 0, 1, 2 oder 3 ist,
- **f**: 0, 1 oder 2 ist und
- **g**: 0, 1 oder 2 ist,
mit der Maßgabe, dass die Summe **(e+f+g)** kleiner oder gleich 3 ist und je Molekül mindestens 2 Reste **R¹** und gleichzeitig mindestens 2 Reste **R⁴** vorliegen.

Besonders bevorzugt werden lineare Organopolysiloxane (B) eingesetzt, welche aus Einheiten der Formel R"₃SiO_{1/2}, R"₂SiO_{1/2}, R"₂R¹SiO_{1/2}, R"₂R⁴SiO_{1/2}, R"R¹O_{2/2} und R"R⁴O_{2/2} bestehen.

Beispiele für verzweigte Organopolysiloxane (B) sind solche aus SiO_{4/2}, R"₃SiO_{1/2}-, R"₂R⁴SiO_{1/2}- und R"₂R¹SiO_{1/2}- Einheiten, sogenannte MQ-Harze, wobei diese Harze zusätzlich R"SiO_{3/2}-, R¹SiO_{3/2}-, R⁴SiO_{3/2}-, R"R¹O_{2/2}-, R"R⁴O_{2/2}- und R"₂SiO_{2/2}-Einheiten enthalten können.

Beispiele für monomere siliciumorganische Verbindungen (B) sind Verbindungen der allgemeinen Formel (XV)

R"ₕR¹ᵢR⁴ⱼSi(OR)ᵤ(OR¹)ᵥ(OR⁴)_{w} (XV)

wobei
- **h**: 0 oder 1,
- **i**: 0, 1, 2, 3 oder 4,
- **j**: 0, 1, 2, 3 oder 4,
- **u**: 0 oder 1,
- **v**: 0, 1, 2, 3 oder 4,
- **w**: 0, 1, 2, 3 oder 4 bedeuten,
die Summe **(h+i+j+u+v+w)** immer gleich 4 ist und
die Reste R" und R⁴ den oben genannten Bedingungen entsprechen, mit der Maßgabe, dass je Molekül mindestens ein Rest **R¹** und mindestens ein Rest **R⁴** vorliegt, sowie dass die Summe der Reste **(R¹+ R⁴)** je Molekül mindestens 3 ist.

Die Organopolysiloxane (B) besitzen vorzugsweise eine durchschnittliche Viskosität von mindestens 0,01 besonders bevorzugt mindestens 0,1 Pa•s, bis 500 000 Pa•s, besonders bevorzugt höchstens 100 000 Pa•s, insbesondere höchstens 50 000 Pa•s, jeweils bei 25°C.

Die Organopolysiloxane (B) sind nach in der Chemie gängigen Methoden herstellbar.

Bevorzugte durch die "Click-Reaktion" vernetzbare Siliconzusammensetzungen (S) werden enthalten
- jeweils mindestens eine Verbindung (A), (C) und (D),
- jeweils mindestens eine Verbindung (A), (B) und (D),
- jeweils mindestens eine Verbindung (B), (C) und (D),
- jeweils mindestens eine Verbindung (B) und (D), oder
- jeweils mindestens eine Verbindung (A), (B), (C) und (D).

Der Kupferkatalysator (D) enthält Kupfer in elementarer Form oder in Form einer oder mehrerer Verbindungen und ist nützlich als Katalysator für die vorstehend erläuterte "Click-Reaktion".

Beispiele für Kupferkatalysatoren (D) sind:
- Elementares Kupfer, bevorzugt als Pulver, aber auch in jeder anderen Form, entweder durch direkte Zugabe oder durch Verwendung von Reaktions-Gefäßen, bzw. -Oberflächen die aus Kupfer oder kupferhaltigen Legierungen (Bronze, Messing) bestehen.
- Cu(I)-Salze wie Kupfer(I)-halogenide, z.B. Kupfer(I)-iodid, Kupfer(I)-bromid, Kupfer(I)-chlorid, Tetrakisacetonitrilokupfer(I)-hexafluorophosphat, Triphenylphosphin-kupfer(I)-bromid, Kupfer(I)-triflat, Kupfer(I)-tetrafluoroborat, Kupfer(I)-acetat, Kupfer(I)-nitrat.
- Außerdem Gemische die unter den gegebenen Reaktionsbedingungen Cu(I)-Ionen erzeugen wie z.B. Gemische aus Kupfer(II)-salzen und Polytriazolverbindungen wie Tris[(1-benzyl-1*H*-1,2,3-triazol-4-yl)methyl]amin (TBTA) oder Gemische aus Kupfer(II)-Salzen und mindestens einem Zusatzstoff wie Natriumascorbat, elementarem Kupfer, sekundären Aminen wie Diisopropylamin, tertiären Aminen wie Triethylamin, Diisopropylethylamin oder Pentamethyldiethylentriamin (PMDETA).

Die in solchen Gemischen eingesetzten Cu(II)-Salze sind vorzugsweise Kupfer(II)-sulfat, Kupfer(II)-chlorid, Kupfer(II)-nitrat, Kupfer(II)-carbonat oder Kupfer(II)-acetat (jeweils mit oder ohne Kristallwasser).
- Anstelle von Cu(II)-Salzen kann in zuvor genannten Gemischen auch elementares Kupfer als Quelle von Cu(I)-Ionen dienen.
- Ebenso können Gemische aus einem Phosphan wie z.B. tris(carboxyethyl)phosphan (TCPE) und einer Kupferquelle wie elementares Kupfer, oder Cu(I)- oder Cu(II)-Salze genutzt werden.
- Alle zuvor genannten Kupferverbindungen und Reaktionsgemische können auch auf geeigneten Trägermaterialien (z.B. Aktivkohle, disperse Kieselsäuren, organische polymere Harze) adsorbiert sein, oder auf diesen als Metallkomplexverbindung kovalent gebunden vorliegen.

Gleichwohl können alle zuvor genannten Kupferkatalysatoren (D) in jeder Oxidationsstufe miteinander und gegebenenfalls mit den zuvor genannten Zusatzstoffen, in jedem beliebigen Verhältnis gemischt werden.

Kupferkatalysatoren (D) werden vorzugsweise in einem Mengenanteil von mindestens 0,00001 %, bevorzugt mindestens 0,0001 und insbesondere bevorzugt mindestens 0,001 % und höchstens 20 %, bevorzugt höchstens 5 % und insbesondere bevorzugt höchstens 2 %, jeweils bezogen auf das Gesamtgewicht der Siliconzusammensetzungen (S) zugesetzt.

Neben den oben genannten Bestandteilen (A), (B), (C) und (D) können noch weitere Bestandteile (E) oder (F) in den Siliconzusammensetzungen (S) enthalten sein.

Bestandteile (E) sind beispielsweise Stabilisatoren und dienen der gezielten Einstellung der Verarbeitungszeit und Vernetzungsgeschwindigkeit der Siliconzusammensetzungen (S). Diese Stabilisatoren sind aus bisherigen Publikationen auf dem Gebiet der "Click-Chemie" sehr gut bekannt. Dabei handelt es sich im allgemeinen um organische, Stickstoff enthaltende Verbindungen wie Amine, Amide, Nitrile, Imidazole, Pyridine, Pyrrole und Triazole. Ebenso können hierfür auch Phosphane und Phosphite eingesetzt werden, genauso wie Organosiliciumverbindungen, die organische Reste tragen, welche Stickstoff oder Phosphor als Heteroatom beinhalten.

Beispiele für organische Verbindungen (E) sind Amine wie sekundäre Amine, z.B. Diisopropylamin, tertiäre Amine, z.B. Triethylamin, Diisopropylethylamin oder Pentamethyldiethylentriamin (PMDETA), cyclische Amine, z.B. Piperidin, Piperazin oder Morpholin. Außerdem aromatische Heterocyclen, wie z.B. Pyridin, 2,4-Lutidin, 2,6-Lutidin, Collidin, Pyrrol, Imidazol und Polytriazol-verbindungen wie Tris[(1-benzyl-1*H*-1,2,3-triazol-4-yl)methyl]amin (TBTA). Beispiele für siliciumorganische Verbindungen (E) sind (N-Cyclohexylaminomethyl)triethoxysilan, (N-Cyclohexylaminomethyl)methyldiethoxysilan, (N-Phenylaminomethyl)-trimethoxysilan, (N-Phenylaminomethyl)methyldimethoxysilan, N-(2-Aminoethyl)(3-aminopropyl)trimethoxysilan, (3-Aminopropyl)-triethoxysilan, N-(2-Aminoethyl)(3-aminopropyl)methyldimethoxysilan, (3-Aminopropyl)trimethoxysilan. Selbstverständlich können auch Mischungen von verschiedenen Verbindungen (E) eingesetzt werden.

Die Wirkung dieser Zusätze (E) hängt von ihrer chemischen Struktur ab, sodass sie individuell bestimmt werden muss. Im allgemeinen beruht die Wirkung der Zusätze (E) entweder auf ihrem basischen Charakter, der die Bildung des Kupferacetylids erleichtert, oder auf der Stabilisierung des Cu(I)-Ions durch die Bildung von Komplexverbindungen.

Ein weiterer Vorteil dieser polaren Additive (E) ist, dass durch die Zumischung dieser Verbindungen zu den Siliconzusammensetzungen (S) eine verbesserte Selbsthaftung der vernetzten Kautschukmassen auf diversen Materialien zu erreichen ist. Ein allgemeiner Nachteil von Siliconelastomeren ist bekanntlich die geringe Wechselwirkung (hohe Adhäsivität) mit anderen Werkstoffen, wie Metallen und Polymeren, die die Zumischung von haftvermittelnden Additiven notwendig macht. Die in additionsvernetzbaren Siliconzusammensetzungen (S) enthaltenen Platinkatalysatoren reagieren bekanntermaßen sehr empfindlich auf polare Additive (wie beispielsweise Verbindungen(E)) und verlieren ihre katalytische Aktivität. Auch die in kondensationsvernetzbaren Siliconzusammensetzungen (S) enthaltenen Zinnkatalysatoren zeigen nach Zumischung von Verbindungen (E) eine Abnahme ihrer Reaktivität. Im Gegensatz hierzu haben Zusätze (E) in den Siliconzusammensetzungen (S) sogar positive Effekte (Stabilisierung, Steigerung der Reaktivität).

Stabilisatoren und Stabilisatormischungen werden vorzugsweise in einem Mengenanteil von mindestens 0,0001 %, bevorzugt mindestens 0,001 und insbesondere bevorzugt mindestens 0,01 % und höchstens 20 %, bevorzugt höchstens 5 % und insbesondere bevorzugt höchstens 2 %, jeweils bezogen auf das Gesamtgewicht der Siliconzusammensetzungen (S) zugesetzt.

Komponenten (F) sind alle weiteren Zusatzstoffe, die auch bisher zur Herstellung von additionsvernetzbaren oder kondensationsvernetzbaren Zusammensetzungen eingesetzt wurden. Beispiele für verstärkende Füllstoffe, die als Komponente (F) in den Siliconzusammensetzungen (S) eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind. Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich. Der Gehalt der vernetzbaren Siliconzusammensetzungen (S) an aktiv verstärkendem Füllstoff (F) liegt im Bereich von 0 bis 70 Gew.-%, vorzugsweise bei 0 bis 50 Gew.-%.

Die Siliconzusammensetzung (S) kann wahlweise als Bestandteile (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, verstärkende und nicht verstärkende Füllstoffe, Fungicide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerden, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Metallstäube, Farbstoffe, Pigmente usw.

Die Siliconzusammensetzungen (S) können, falls erforderlich, in Flüssigkeiten gelöst, dispergiert, suspendiert oder emulgiert werden. Die Zusammensetzungen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Zusammensetzungen der Fall sein kann. Insbesondere können die Zusammensetzungen, falls sie hochviskos sind, in Form eines Granulates zubereitet werden. Hierbei können die eingesetzten Komponenten gemischt oder getrennt in verschiedenen Granulatteilchen eingearbeitet sein. Hinsichtlich der elastomeren Eigenschaften der vernetzten Siliconzusammensetzungen (S) wird gleichfalls das gesamte Spektrum umfaßt, beginnend bei extrem weichen Silicongelen, über gummiartige Materialien bis hin zu hochvernetzten Siliconen mit glasartigem Verhalten.

Die Herstellung der Siliconzusammensetzungen (S) kann nach bekannten Verfahren erfolgen, wie beispielsweise durch gleichmäßige Vermischung der einzelnen Komponenten. Die Reihenfolge dabei ist beliebig, bevorzugt ist jedoch die gleichmäßige Vermischung des Kupferkatalysators (D) mit einer Mischung aus (A), (C) und gegebenenfalls (E) und (F). Der eingesetzte Kupferkatalysator (D) kann dabei als Festsubstanz oder als Lösung - in einem geeigneten Lösungsmittel gelöst - oder als sogenannter Batch - gleichmäßig mit einer geringen Menge (A), oder (A) mit (F) vermischt - eingearbeitet werden.

Bei den eingesetzten Komponenten (A) bis (F) kann es sich jeweils um eine einzelne Art einer solchen Komponente, wie auch um ein Gemisch aus mindestens zwei verschiedenen Arten einer solchen Komponente handeln.

Die, durch eine Cycloaddition zwischen Kohlenstoff-gebundenen Azidgruppen und terminalen Alkinen vernetzbaren, Siliconzusammensetzungen (S) können unter den gleichen Bedingungen vernetzt werden, wie die bisher bekannten, durch eine Hydrosilylierungsreaktion, vernetzbaren Zusammensetzungen.

Vorzugsweise handelt es sich dabei um Temperaturen von -30 bis 220°C, besonders bevorzugt von 10 bis 100°C, und einem Druck von 900 bis 1100 hPa. Es können aber auch höhere oder niedrigere Temperaturen und Drücke angewendet werden.

Ein weiterer Gegenstand der vorliegenden Erfindung sind Formkörper hergestellt durch Vernetzung der Siliconzusammensetzungen (S).

Die Siliconzusammensetzungen (S) sowie die daraus hergestellten Vernetzungsprodukte können für alle Zwecke eingesetzt werden, für die auch bisher zu Elastomeren vernetzbare Organopolysiloxanzusammensetzungen bzw. Elastomere verwendet wurden. Dies umfasst beispielsweise die Siliconbeschichtung bzw. Imprägnierung beliebiger Substrate, die Herstellung von Formteilen, beispielsweise im Spritzguß-verfahren, Vakuumextrusionsverfahren, Extrusionsverfahren Formgießen und Formpressen, und Abformungen, die Verwendung als Dicht-Einbett- und Vergussmassen usw.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt.

### Beispiele

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Im folgenden beziehen sich alle Viskositätsangaben auf eine Temperatur von 25°C. Die nachstehend beschriebenen Mischungen wurden mit Hilfe eines Rührers der Firma Janke & Kunkel IKA-Labortechnik, Typ RE 162 hergestellt.

### Beispiel 1

1,55 g Tetrakis(acetonitrilo)kupfer(I)hexafluorophosphat wurden in 5 ml Acetonitril gelöst und mit 9,5 g des Vernetzers Pentaerythrityltetraazid gemischt. Die Mischung wurde im Vakuum von flüchtigen Bestandteilen befreit und mit 50,0 g eines Dipropargylaminopropyl-terminierten Polydimethylsiloxans mit nachfolgender Strukturformel homogen gemischt.

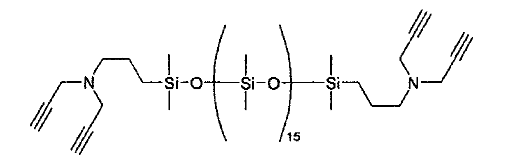

Nach einer Vulkanisationszeit von 4 h bei 25 °C wurde ein klebfreies festes Vulkanisat mit einer Härte von 95 Shore A erhalten.

### Beispiel 2

1,0 g Kupfer(I)iodid wurden in 5 ml Acetonitril gelöst und mit 9,0 g des Vernetzers Pentaerythrityltetraazid gemischt. Die Mischung wurde im Vakuum von flüchtigen Bestandteilen befreit und mit 50,0 g eines Dipropargylaminopropyl-terminierten Polydimethylsiloxans mit nachfolgender Strukturformel homogen gemischt.

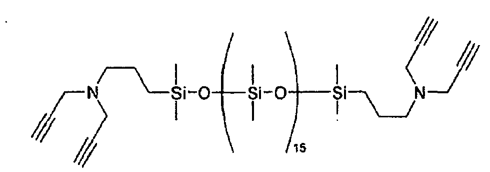

Nach einer Vulkanisationszeit von 4 h bei 100°C wurde ein klebfreies festes Vulkanisat mit einer Härte von 85 Shore A erhalten.

### Beispiel 3

0,5 g Tetrakis(acetonitrilo)kupfer(I)hexafluorophosphat wurden in 3 ml Acetonitril gelöst und mit 4,0 g des Vernetzers Pentaerythrityltetraazid gemischt. Die Mischung wurde im Vakuum von flüchtigen Bestandteilen befreit und mit 50,0 g eines Dipropargylaminopropyl-terminierten Polydimethylsiloxans mit nachfolgender Strukturformel homogen gemischt.

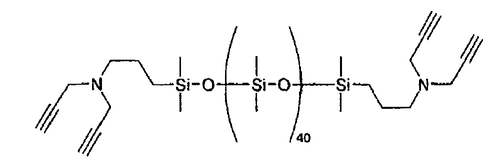

Nach einer Vulkanisationszeit von 12 h bei 25 °C wurde ein klebfreies festes gummielastisches Vulkanisat mit einer Härte von 45 Shore A erhalten.

### Beispiel 4

0,4 g Tetrakis(acetonitrilo)kupfer(I)hexafluorophosphat wurden in 3 ml Acetonitril gelöst und mit 3,8 g des Vernetzers Pentaerythrityltetraazid gemischt. Die Mischung wurde im Vakuum von flüchtigen Bestandteilen befreit und mit 50,0 g eines Dipropargylaminopropyl-terminierten Polydimethylsiloxans mit nachfolgender Strukturformel homogen gemischt.

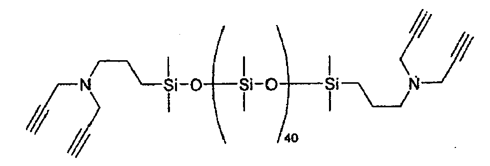

Nach einer Vulkanisationszeit von 9 h bei 100°C wurde ein klebfreies festes gummielastisches Vulkanisat mit einer Härte von 35 Shore A erhalten.

### Beispiel 5

0,06 g Tetrakis(acetonitrilo)kupfer(I)hexafluorophosphat wurden in 1 ml Acetonitril gelöst und mit 0,4 g des Vernetzers Pentaerythrityltetraazid gemischt. Die Mischung wurde im Vakuum von flüchtigen Bestandteilen befreit und mit 50,0 g eines Dipropargylaminopropyl-terminierten Polydimethylsiloxans mit nachfolgender Strukturformel homogen gemischt.

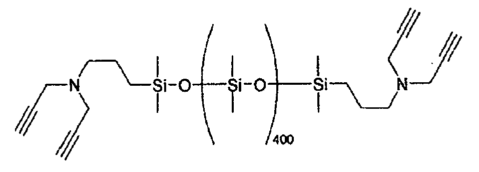

Nach einer Vulkanisationszeit von 36 h bei 25 °C wurde ein klebfreies gummielastisches Vulkanisat mit einer Härte von 20 Shore 00 erhalten.

### Beispiel 6

0,09 g Tetrakis(acetonitrilo)kupfer(I)hexafluorophosphat wurden in 1 ml Acetonitril gelöst und mit 0,6 g des Vernetzers Pentaerythrityltetraazid gemischt. Die Mischung wurde im Vakuum von flüchtigen Bestandteilen befreit und mit 50,0 g eines Dipropargylaminopropyl-terminierten Polydimethylsiloxans mit nachfolgender Strukturformel homogen gemischt.

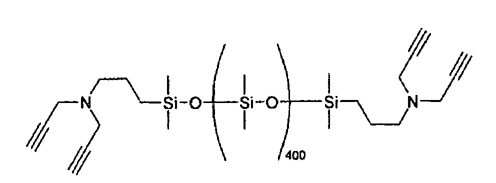

Nach einer Vulkanisationszeit von 24 h bei 100°C wurde ein klebfreies gummielastisches Vulkanisat mit einer Härte von 30 Shore 00 erhalten.

### Beispiel 7

Komponente 1 besteht aus einer homogenen Mischung aus 35 g einer Oberflächen-hydrophobierten pyrogenen Kieselsäure mit einer BET-Oberfläche von 130 g/m², 50 g eines α,ω-Ethinyl-terminierten Polydimethylsiloxans einer Viskosität von 1000 mPas, 35 g eines α,ω-(3-Azidopropyl)-terminierten Polydimethylsiloxans einer Viskosität von 1000 mPas, 4 g eines Trimethylsilyl-terminierten Polydimethylsiloxans einer Viskosität von 30000 mPas und 4 g eines azidofunktionellen Polyorganosiloxan-Vernetzers einer Viskosität von 250 mPas mit nachfolgender Strukturformel.

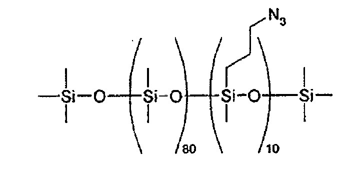

Komponente 2 besteht aus einer homogenen Mischung aus 20 g eines α,ω-Ethinyl-terminierten Polydimethylsiloxans einer Viskosität von 1000 mPas, 6 g eines α,ω-Ethinyl-terminierten Polydimethyl-siloxans einer Viskosität von 20000 mPas, 20 g eines α,ω-Ethinyl-terminierten Polydimethylsiloxans einer Viskosität von 200 mPas, 1,5 g Triphenylphosphin-kupfer(I)-bromid und 1 g Pentamethyldiethylentriamin.

Nach dem homogenen Einmischen von 5 g der Komponente 2 in 50 g der Komponente 1 und einer Vulkanisationszeit von 14 h bei 25 °C wurde ein klebfreies gummielastisches Vulkanisat mit einer Härte von 30 Shore A erhalten.

## Patentansprüche

1. Durch die Click-Reaktion vernetzbare mehrkomponentige Siliconzusammensetzungen (S), welche nach Mischen der einzelnen Komponenten zu einem gummielastischen Material aushärten, die
- mindestens eine Verbindung (A) oder (B),
- mindestens eine Verbindung (B) oder (C), und
- mindestens einen Cu-Katalysator (D)
enthalten, wobei
(A) eine organische Verbindung oder eine siliciumorganische Verbindung darstellt, welche mindestens zwei Reste mit terminalen aliphatischen Kohlenstoff-Kohlenstoff-Dreifachbindungen mit endständig gebundenem Wasserstoff besitzt;
(B) eine organische Verbindung oder eine siliciumorganische Verbindung darstellt, welche mindestens zwei Reste mit terminalen aliphatischen Kohlenstoff-Kohlenstoff-Dreifachbindungen mit endständig gebundenem Wasserstoff und gleichzeitig mindestens zwei Reste mit Kohlenstoff-gebundenen Azidgruppen besitzt;
(C) eine organische Verbindung oder eine siliciumorganische Verbindung darstellt, welche mindestens zwei Reste mit Kohlenstoff-gebundenen Azidgruppen besitzt;
mit der Maßgabe, dass eine Komponente nicht gleichzeitig Verbindungen der Gruppe (B) und (D), oder gleichzeitig (A), (C) und (D) enthält, und
dass mindestens eine der eingesetzten Verbindung, ausgewählt aus (A), (B) und (C) eine siliciumorganische Verbindung darstellt.

2. Siliconzusammensetzungen (S) nach Anspruch 1, bei denen als Organosiliciumverbindungen (A) Organopolysiloxane aus Einheiten der allgemeinen Formel (I)
RₐR¹_{b}SiO_{(4-a-b)/2} (I)
eingesetzt werden, wobei
**R** ein von aliphatischen Kohlenstoff-Kohlenstoff- Dreifachbindungen freien, organischen oder anorganischen Rest,
**R¹** einen einwertigen, substituierten oder nicht substituierten, SiC-gebundenen Kohlenwasserstoffrest mit mindestens einer aliphatischen terminalen Kohlenstoff- Kohlenstoff-Dreifachbindung,
**a** 0, 1, 2 oder 3 und
**b** 0, 1, 2 oder 3
bedeuten,
mit der Maßgabe, dass die Summe **a + b** kleiner oder gleich 3 ist und mindestens 2 Reste **R¹** je Molekül vorliegen.

3. Siliconzusammensetzungen (S) nach Anspruch 1 oder 2, bei denen die Verbindungen (C) siliciumfreie Kohlenwasserstoffe mit 6 bis 50 Kohlenstoffatomen sind, die jeweils Heteroatome ausgewählt aus N, O, S, P, aufweisen können, die mindestens zwei kohlenstoffgebundene Azidgruppen tragen.

4. Siliconzusammensetzungen (S) nach Anspruch 1 oder 2, bei denen als Organopolysiloxane (C) lineare, cyclische oder verzweigte Organopolysiloxane aus Einheiten der allgemeinen Formel (VIII)
R'_{c}R⁴_{b}SiO_{(4-c-d)/2} (VIII)
eingesetzt werden, wobei
**R'** die Bedeutungen von R gemäss Anspruch 2 aufweist,
**R⁴** einen einwertigen, substituierten oder nicht substituierten, SiC-gebundenen Kohlenwasserstoffrest mit mindestens einer Kohlenstoff-gebundenen Azidgruppe,
**c** 0, 1, 2 oder 3 und
**d** 0, 1, 2 oder 3
bedeuten,
mit der Maßgabe, dass die Summe **c** + **d** kleiner oder gleich 3 ist und mindestens 2 Reste **R⁴** je Molekül vorliegen.

5. Siliconzusammensetzungen (S) nach Anspruch 1 bis 4, welche
- mindestens eine Verbindung (A), (C) und (D) oder
- mindestens eine Verbindung (A), (B) und (D) oder
- mindestens eine Verbindung (B), (C) und (D) oder,
- mindestens eine Verbindung (B) und (D) oder
- mindestens eine Verbindung (A), (B), (C) und (D) enthalten.

6. Siliconzusammensetzungen (S) nach Anspruch 1 bis 5, bei denen der Kupferkatalysator (D) ausgewählt wird aus elementarem Kupfer, Cu(I)-Salzen und Cu(II)-salzen und deren Gemischen.

7. Siliconzusammensetzungen (S) nach Anspruch 1 bis 6, bei denen die Kupferkatalysatoren (D) in einem Mengenanteil von 0,0001 bis 5 %, bezogen auf das Gesamtgewicht der Siliconzusammensetzungen (S) zugesetzt werden.

8. Siliconzusammensetzungen (S) nach Anspruch 1 bis 7, welche als Bestandteile (E) Stabilisatoren enthalten, die ausgewählt werden aus organischen Stickstoff enthaltenden Verbindungen, Phosphanen, Phosphiten und Organosiliciumverbindungen, die organische Reste tragen, welche Stickstoff oder Phosphor als Heteroatom beinhalten.

9. Siliconzusammensetzungen (S) nach Anspruch 1 bis 8, welche als Bestandteile (F) Zusatzstoffe enthalten, die ausgewählt werden aus Füllstoffen, Fungiciden, Duftstoffen, rheologischen Additiven, Korrosionsinhibitoren, Oxidationsinhibitoren, Lichtschutzmitteln, flammabweisend machenden Mitteln, Mitteln zur Beeinflussung der elektrischen Eigenschaften, Dispergierhilfsmitteln, Lösungsmittel, Haftvermittlern, Pigmenten, Farbstoffen, Weichmachern, organische Polymeren und Hitzestabilisatoren.

10. Verfahren zur Herstellung der Siliconzusammensetzungen (S) gemäss Anspruch 1 bis 9, bei dem
- mindestens eine Verbindung (A) oder (B),
- mindestens eine Verbindung (B) oder (C), und
- mindestens einen Cu-Katalysator (D)
miteinander vermischt werden.

11. Formkörper hergestellt durch Vernetzung der Siliconzusammensetzungen (S) gemäss Anspruch 1 bis 9.

12. Verwendung der Siliconzusammensetzungen (S) gemäss Anspruch 1 bis 9 zur Siliconbeschichtung oder -Imprägnierung beliebiger Substrate, zur Herstellung von Formteilen, für Abformungen und als Dicht- Einbett- und Vergussmassen.

## Claims

1. Multicomponent silicone compositions (S) which can be crosslinked via the click reaction and which, after mixing of the individual components, harden to give an elastomeric material, and which comprise
- at least one compound (A) or (B),
- at least one compound (B) or (C), and
- at least one Cu catalyst (D),
where
(A) is an organic compound or an organosilicon compound which possesses at least two moieties having terminal aliphatic carbon-carbon triple bonds having terminally bonded hydrogen;
(B) is an organic compound or an organosilicon compound which possesses at least two moieties having terminal aliphatic carbon-carbon triple bonds having terminally bonded hydrogen and simultaneously at least two moieties having carbon-bonded azide groups;
(C) is an organic compound or an organosilicon compound which possesses at least two moieties having carbon-bonded azide groups;
with the proviso that a component does not simultaneously comprise compounds of the group (B) and (D), or simultaneously comprise (A), (C) and (D), and
that at least one of the compounds used, selected from (A), (B) and (C), is an organosilicon compound.

2. Silicone compositions (S) according to Claim 1, in which, as organosilicon compounds (A), organopolysiloxanes composed of units of the general formula (I)
RₐR¹_{b}SiO_{(4-a-b)/2} (I)
are used, where
**R** is an organic or inorganic moiety free from aliphatic carbon-carbon triple bonds,
**R¹** is a monovalent, substituted or unsubstituted, SiC- bonded hydrocarbon moiety having at least one aliphatic terminal carbon-carbon triple bond,
**a** is 0, 1, 2 or 3 and
**b** is 0, 1, 2 or 3, with the proviso that the sum **a** + **b** is smaller than or equal to 3, and at least 2 moieties **R¹** are present per molecule.

3. Silicone compositions (S) according to Claim 1 or 2, in which the compounds (C) are silicon-free hydrocarbons having from 6 to 50 carbon atoms, each of which can have heteroatoms selected from N, O, S, and P, and which bear at least two carbon-bonded azide groups.

4. Silicone compositions (S) according to Claim 1 or 2, in which, as organopolysiloxanes (C), linear, cyclic or branched organopolysiloxanes composed of units of the general formula (VIII)
R"_{c}R⁴_{b}SiO_{(4-c-d)/2} (VIII)
are used, where
**R'** is defined as for **R** according to Claim 2,
**R⁴** is a monovalent, substituted or unsubstituted, siC- bonded hydrocarbon moiety having at least one carbon-bonded azide group,
**c** is 0, 1, 2 or 3 and
**d** is 0, 1, 2 or 3,
with the proviso that the sum **c** + **d** is smaller than or equal to 3 and at least 2 moieties **R⁴** are present per molecule.

5. Silicone compositions (S) according to any of Claims 1 to 4, which comprise
- at least one compound (A), (C) and (D) or
- at least one compound (A), (B) and (D) or
- at least one compound (B), (C) and (D) or
- at least one compound (B) and (D) or
- at least one compound (A), (B), (C) and (D).

6. Silicone compositions (S) according to any of Claims 1 to 5, in which the copper catalyst (D) is selected from elemental copper, Cu(I) salts and Cu(II) salts and their mixtures.

7. Silicone compositions (S) according to any of Claims 1 to 6, in which the quantitative proportion added of the copper catalysts (D), based on the total weight of the silicone compositions (S), is from 0.0001 to 5%.

8. Silicone compositions (S) according to any of Claims 1 to 7, which comprise, as constituents (E), stabilizers which are selected from compounds containing organic nitrogen, phosphanes, phosphites and organosilicon compounds which bear organic moieties, where these include nitrogen or phosphorus as heteroatom.

9. Silicone compositions (S) according to any of Claims 1 to 8, which comprise, as constituents (F),
additives which are selected from fillers, fungicides, fragrances, rheological additives, corrosion inhibitors, oxidation inhibitors, light stabilizers, flame retardants, agents for influencing electrical properties, dispersing agents, solvents, adhesion promoters, pigments, dyes, plasticizers, organic polymers, and heat stabilizers.

10. Process for the production of the silicone compositions (S) according to any of Claims 1 to 9, by mixing the following with one another:
- at least one compound (A) or (B),
- at least one compound (B) or (C), and
- at least one Cu catalyst (D).

11. Molding produced via crosslinking of the silicone compositions (S) according to any of Claims 1 to 9.

12. Use of the silicone compositions (S) according to any of Claims 1 to 9, for the silicone-coating or - impregnation of any desired substrates, for the production of moldings, for casting processes, and as sealing, embedding and potting compounds.

## Revendications

1. Compositions de silicone (S) à plusieurs composants, réticulables par la réaction Click, qui durcissent après mélange des différents composants en un matériau élastique caoutchouteux, qui contiennent
- au moins un composé (A) ou (B),
- au moins un composé (B) ou (C), et
- au moins un catalyseur à base de Cu (D)
où
(A) représente un composé organique ou un composé organosilicié, qui possède au moins deux radicaux avec des triples liaisons carbone-carbone aliphatiques terminales avec de l'hydrogène lié en position terminale ;
(B) représente un composé organique ou un composé organosilicié, qui possède au moins deux radicaux avec des triples liaisons carbone-carbone aliphatiques terminales avec de l'hydrogène lié en position terminale et simultanément au moins deux radicaux avec des groupes azide liés par carbone ;
(C) représente un composé organique ou un composé organosilicié, qui possède au moins deux radicaux avec des groupes azide liés par carbone ;
à condition qu'un composant ne contienne pas simultanément des composés des groupes (B) et (D), ou simultanément (A), (C) et (D), et
qu'au moins un des composés utilisés, choisi parmi (A), (B) et (C), représente un composé organosilicié.

2. Compositions de silicone (S) selon la revendication 1, dans lesquelles on utilise comme composés organosiliciés (A) des organopolysiloxanes constitués d'unités de formule générale (I)
RₐR¹_{b}SiO_{(4-a-b)/2} (I)
où
R signifie un radical organique ou inorganique exempt de triples liaisons carbone-carbone aliphatiques,
R¹ signifie un radical hydrocarboné monovalent, substitué ou non substitué, lié par SiC présentant au moins une triple liaison carbone-carbone aliphatique terminale,
a vaut 0, 1, 2 ou 3 et
b vaut 0, 1, 2 ou 3,
à condition que la somme de a + b soit inférieure ou égale à 3 et qu'il existe au moins 2 radicaux R¹ par molécule.

3. Compositions de silicone (S) selon la revendication 1 ou 2, dans lesquelles les composés (C) sont des hydrocarbures exempts de silicium comprenant 6 à 50 atomes de carbone, qui peuvent présenter à chaque fois des hétéroatomes choisis parmi N, O, S, P, qui portent au moins deux groupes azide liés par carbone.

4. Compositions de silicone (S) selon la revendication 1 ou 2, dans lesquelles on utilise comme organopolysiloxanes (C) des organopolysiloxanes linéaires, cycliques ou ramifiés constitués d'unités de formule générale (VIII)
R'_{c}R⁴_{b}SiO_{(4-c-d)/2} (VIII)
où
R' présente les significations de R selon la revendication 2,
R⁴ signifie un radical hydrocarboné monovalent, substitué ou non substitué, lié par SiC présentant au moins un groupe azide lié par carbone,
c vaut 0, 1, 2 ou 3 et
d vaut 0, 1, 2 ou 3,
à condition que la somme de c + d soit inférieure ou égale à 3 et qu'il existe au moins 2 radicaux R⁴ par molécule.

5. Compositions de silicone (S) selon la revendication 1 à 4, qui contiennent
- au moins un composé (A), (C) et (D) ou
- au moins un composé (A), (B) et (D) ou
- au moins un composé (B), (C) et (D) ou
- au moins un composé (B) et (D) ou
- au moins un composé (A), (B), (C) et (D).

6. Compositions de silicone (S) selon la revendication 1 à 5, dans lesquelles le catalyseur à base de cuivre (D) est choisi parmi le cuivre élémentaire, les sels de Cu(I) et de Cu(II) et leurs mélanges.

7. Compositions de silicone (S) selon la revendication 1 à 6, dans lesquelles les catalyseurs à base de cuivre (D) sont ajoutés en une proportion quantitative de 0,0001 à 5%, par rapport au poids total des compositions de silicone (S).

8. Compositions de silicone (S) selon la revendication 1 à 7, qui contiennent comme constituants (E) des stabilisateurs, qui sont choisis parmi les composés organiques contenant de l'azote, les phosphanes, les phosphites et les composés organosiliciés qui portent des radicaux organiques qui contiennent de l'azote ou du phosphore comme hétéroatome.

9. Compositions de silicone (S) selon la revendication 1 à 8, qui contiennent comme constituants (F) des additifs, qui sont choisis parmi les charges, les fongicides, les parfums, les additifs rhéologiques, les inhibiteurs de corrosion, les inhibiteurs d'oxydation, les agents de protection contre la lumière, les agents retardateurs de flammes, les agents pour influencer les propriétés électriques, les adjuvants de dispersion, les solvants, les promoteurs d'adhérence, les pigments, les colorants, les plastifiants, les polymères organiques et les stabilisateurs à la chaleur.

10. Procédé pour la préparation des compositions de silicone (S) selon la revendication 1 à 9, dans lequel
- au moins un composé (A) ou (B),
- au moins un composé (B) ou (C), et
- au moins un catalyseur à base de Cu (D) sont mélangés les uns avec les autres.

11. Corps façonnés, préparés par réticulation des compositions de silicone (S) selon la revendication 1 à 9.

12. Utilisation des compositions de silicone (S) selon la revendication 1 à 9 pour le revêtement ou l'imprégnation au silicone de substrats quelconques, pour la fabrication de pièces façonnées, pour les moulages et comme masses d'étanchéité, d'enrobage et de scellement.
